# EUROPÄISCHE PATENTSCHRIFT

(11) **EP 0 986 159 B1**
(45) Veröffentlichungstag und Bekanntmachung des Hinweises auf die Patenterteilung: **25.10.2006**
(21) Anmeldenummer: 99116662.0
(22) Anmeldetag: 26.08.1999
(51) Int. Cl.: H02K 1/27, H01F 7/02, H02K 15/03

(54) **Kunststoffgebundener Ringmagnet**
Resin-bound annular permanent magnet
Aimant permanent annulaire à liant de résine

(30) Priorität: 08.09.1998 DE 19840914
(43) Veröffentlichungstag der Anmeldung: 15.03.2000
(73) Patentinhaber: Max Baermann GmbH, 51429 Bergisch-Gladbach (DE)
(72) Erfinder: Schwarz, Manfred, 51688 Wipperfürth (DE)
(74) Vertreter: Lippert, Hans-Joachim

(56) Entgegenhaltungen:
- CH-A- 664 459
- DE-C- 4 443 655
- DE-U- 8 614 601
- JP-A- 4 183 245
- PATENT ABSTRACTS OF JAPAN vol. 011, no. 004 (E-468), 7. Januar 1987 (1987-01-07) & JP 61 180405 A (MITSUI TOATSU CHEM INC), 13. August 1986 (1986-08-13)

## Beschreibung

Die Erfindung betrifft einen kunststoffgebundenen Ringmagneten mit einem ringförmigen Grundkörper zur Befestigung des Magneten auf einer Welle, wobei der Magnet im Wesentlichen an einer Stirnseite des Grundkörpers angeordnet ist, der Innendurchmesser des Grundkörpers kleiner ist als derjenige des Magneten und der Grundkörper mindestens eine axial gerichtete, kanalförmige Ausnehmung aufweist, in die sich der Magnet mit einem entsprechend geformten Teil erstreckt.

Ringmagnete der genannten Art werden zum Beispiel als Motormagnete eingesetzt, wobei der Grundkörper, der den Magneten hält, mit Presssitz auf einer Motorwelle befestigt ist. Bei der Konstruktion des Grundkörpers und Magneten ist zu beachten, dass durch den Presssitz des Grundkörpers auf der Welle möglichst keine Spannungen auf den Ringmagneten übertragen werden, so dass dieser vom Grundkörper nicht abreißen kann. Eine bekannte Maßnahme, die eine direkte Übertragung von Radialspannungen von der Welle auf den Ringmagneten vermeidet, besteht darin, dass der Innendurchmesser des Grundkörpers kleiner ist als derjenige des Magneten. Weiterhin ist der Grundkörper aufgrund seines Materials, zum Beispiel Kunststoffmaterials, und seiner Konstruktion, zum Beispiel sich axial erstreckende Durchbrüche, so ausgelegt, dass eine Übertragung von Spannungen über den Grundkörper auf den Ringmagneten weitgehend vermieden wird.

Der Einsatz des Ringmagneten als Motormagnet macht es erforderlich, dass der Ringmagnet auf dem Grundkörper so angeordnet ist, dass eine Verdreh- und axiale Verschiebesicherheit gewährleistet sind. Zu diesem Zweck werden kraft- oder formschlüssige Verbindungen gefordert, da Klebeverbindungen keine dauerhaft sichere Befestigung garantieren. In dieser Beziehung lassen bekannte Ausführungen zu wünschen übrig.

Ein Ringmagnet der eingangs genannten Art ist aus der JP 04 183 245 (vgl. auch Patent Abstracts of Japan Vol. 16, No. 497, 14. Oktober 1992) bekannt. Der in diesem Dokument offenbarte Grundkörper hat an seiner dem Magneten zugewandten Stirnseite Vorsprünge, die in entsprechend ausgebildete Nuten eingreifen, wobei die Vorsprünge und Nuten eine relativ kleine Berührungsfläche zur Herstellung einer Verdrehsicherung zwischen dem Magneten und dem Grundkörper bilden.

Der Erfindung liegt daher die Aufgabe zugrunde, eine formschlüssige Verbindung zwischen dem Ringmagneten und dem Grundkörper zu schaffen, die insbesondere eine bessere Verdrehsicherung des Ringmagneten auf den Grundkörper gewährleistet, wobei der Ringmagnet in einfacher Weise an den Grundkörper angespritzt werden kann.

Die Aufgabe wird erfindungsgemäß dadurch gelöst, dass bei einem kunststoffgebundenen Ringmagneten mit einem ringförmigen Grundkörper der eingangs genannten Art der Grundkörper an seiner dem Magneten zugewandten Stirnseite einen im Wesentlichen hohlzylindrischen Ansatz aufweist, dessen äußere Mantelfläche mit einer Abflachung im Bereich der Ausnehmung versehen ist.

Mit dieser Maßnahme wird eine weitere Verdrehsicherung gewährleistet, wobei die zu einer ersten Verdrehsicherung dienende mindestens eine Ausnehmung eine ausreichende Querschnittsfläche und somit auch eine ausreichende Berührungsfläche mit dem sich in die Ausnehmung erstreckenden Teil des Magneten für eine stabile Verbindung des Grundkörpers mit dem Magneten gewährleisten.

Zur Herstellung des Magneten kann das im erwärmten Zustand fluide Magnetmaterial durch die Ausnehmung in den Formhohlraum gespritzt werden, was sich als Vereinfachung der Spritzgieß-Herstellung des Ringmagneten herausgestellt hat.

Das sich in die Ausnehmung erstreckende Teil des Magneten kann die Ausnehmung ganz oder teilweise ausfüllen. Zweckmäßigerweise weist die Ausnehmung an ihrem vom Formhohlraum abgewandten Ende einen Bereich auf, der als Anspritzhilfe dient und nach dem Spritzgießen nicht mit Magnetmaterial gefüllt ist. Dieser Bereich kann eine an die Spritzdüse angepasste Erweiterung aufweisen.

Bei einer vorteilhaften Weiterbildung der Erfindung weist die Ausnehmung in Richtung zum Ringmagneten eine Querschnittsverjüngung auf. Aufgrund des in der Querschnittsverjüngung angeordneten Teils des Ringmagneten, der an der zur Querschnittsverjüngung benachbarten Stirnseite des Grundkörpers anliegt, wird neben der Verdrehsicherung eine axiale Verschiebesicherung des Magneten auf dem Grundkörper gewährleistet.

In einer bevorzugten Weiterbildung der Erfindung ist die Ausnehmung zur Umfangsfläche des Grundkörpers geöffnet. Sie bildet in diesem Fall einen sich axial am Umfang erstreckenden durchgehenden Kanal. Der sich in diesen Kanal hinein erstreckende Teil des Ringmagneten weist eine dem Außendurchmesser des Grundkörpers entsprechende Oberfläche, die durch die Spritzgießform bedingt ist, auf.

Bei dieser Ausführung kann die vorstehend erwähnte Querschnittsverjüngung dadurch ausgebildet sein, dass die an die Umfangsfläche des Grundkörpers grenzenden Wandbereiche der Ausnehmung zum Ringmagneten hin aufeinander zulaufen.

Darüber hinaus oder andererseits kann vorgesehen sein, dass der radial innen liegende Wandbereich der an der Außenseite des Grundkörpers ausgebildeten Ausbildung in axialer Richtung zur Umfangsfläche hin geneigt verläuft. Die Konizität in radialer Richtung bewirkt ebenfalls eine Verschiebesicherung des Magneten auf dem Grundkörper.

Die von den aufeinander zulaufenden seitlichen Wandbereichen bzw. dem radial geneigten Wandbereich der Ausnehmung gebildeten Winkel sind so gewählt, dass beim Erkalten des Magnetmaterials nach dem Spritzgieß-Verfahren keine Schrumpfspannungen auftreten, die zum Abriß des Magneten an dem sich in die Ausnehmung erstreckenden Teil führen können.

In einer bevorzugten Ausführung weist die an der Außenseite des Grundkörpers ausgebildete Ausnehmung einen im wesentlichen U-förmigen Querschnitt auf, der an der Umfangsfläche des Grundkörpers durch fußförmige Bereiche verengt ist. Diese Verengung gewährleistet eine Sicherung des sich in die Ausnehmung erstreckenden Magnetmaterials gegen die bei hohen Drehzahlen des Ringmagneten auftretenden Zentrifugalkräfte.

Die Anzahl der Ausnehmungen und deren Anordnung kann aus spritzgusstechnischen Gründen durch die Anzahl der Pole bzw. deren Anordnung bestimmt sein. Für einen zweipoligen Magneten sind vorzugsweise zwei diametral gegenüberliegende Ausnehmungen vorgesehen.

Es ist zweckmäßig, den Ansatz nicht zum Preßsitz des Grundkörpers auf der Welle zu verwenden. Daher ist der Innendurchmesser des Ansatzes etwas größer als derjenige des übrigen Grundkörpers. Er kann dem Innendurchmesser des Magneten entsprechen, so dass bei dessen Spritzgieß-Herstellung der Kern sich in den zylinderförmigen Ansatz hinein erstreckt.

Der Innendurchmesser des Ansatzes setzt sich vorteilhafterweise etwas in den übrigen Grundkörper hinein fort, so dass dieser an seinem dem Ringmagneten zugewandten Ende einen entsprechend vergrößerten Innendurchmesser aufweist. Durch diese Maßnahme wird die Übertragung von axial gerichteten Spannungen über den mit Preßsitz auf der Welle sitzenden Grundkörper auf den Ringmagneten weitgehend vermieden.

Ein bevorzugtes Ausführungsbeispiel der Erfindung wird im folgenden anhand der Zeichnung näher beschrieben.

In der Zeichnung zeigen:
- Figur 1: einen Längsschnitt durch einen Ringmagneten mit ringförmigem Grundkörper,
- Figur 2: eine Draufsicht auf den Ringmagneten mit Grundkörper in Richtung des Pfeils II in Figur 1,
- Figur 3: eine stirnseitige Ansicht des Ringmagneten mit Grundkörper in Richtung des Pfeils III in Figur 1 und
- Figur 4: eine vergrößerte Ansicht des mit IV gekennzeichneten Bereichs in Figur 3.

Wie der Zeichnung zu entnehmen ist, ist der kunststoffgebundene Ringmagnet 1 an einen ringförmigen Grundkörper 2 angeformt, der mit einem sich über seine Innenwand erstreckenden Preßbereich an einer (in der Zeichnung nicht dargestellten) Welle kraftschlüssig befestigbar ist. Der Ringmagnet ist dabei im wesentlichen an einer Stirnseite des Grundkörpers 2 angeordnet und erstreckt sich mit zwei stegförmigen Teilen 4 durch zwei an der Außenseite des Grundkörpers 2 diametral gegenüberliegende Ausnehmungen 5.

Der Innendurchmesser des Grundkörpers 2 im Preßbereich 3 ist kleiner als derjenige des Magneten 1, wobei die Außendurchmesser des Grundkörpers 2 und des Magneten 1 etwa gleich sind.

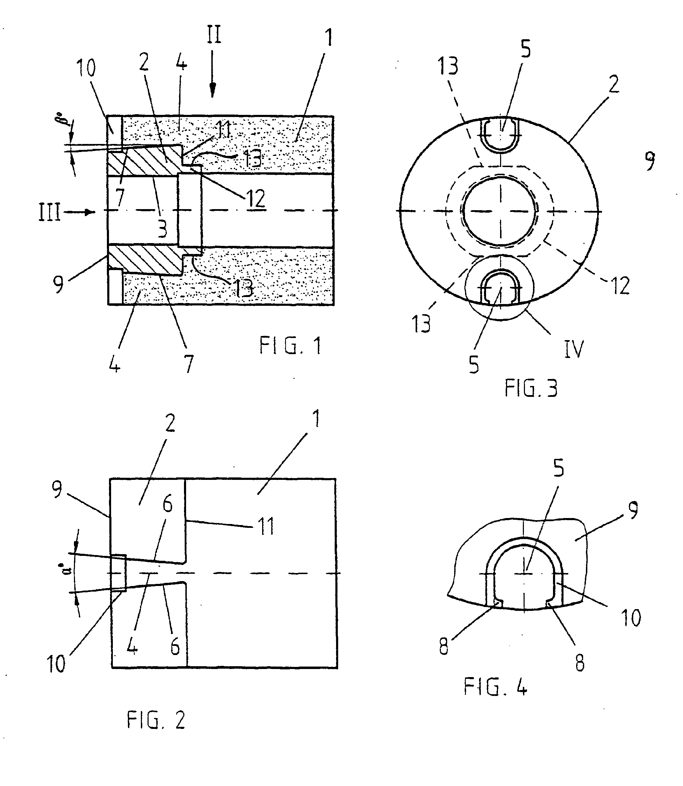

Die Ausnehmungen 5 erstrecken sich, wie insbesondere aus den Figuren 1 und 2 hervorgeht, in axialer Richtung an der Außenseite des im wesentlichen zylinderförmigen Grundkörpers 2. Die an die Umfangsfläche des Grundkörpers 2 grenzenden Wandbereiche 6 der Ausnehmungen laufen zum Ringmagneten 1 hin aufeinander zu und schließen den in Figur 2 eingezeichneten Winkel α ein. Des weiteren verläuft auch der radial innenliegende Wandbereich 7 der Ausnehmung in axialer Richtung zur Umfangsfläche des Grundkörpers 2 hin geneigt. Er schließt mit der axialen Richtung den in Figur 1 eingezeichneten Winkel β ein. Die sowohl in Umfangsrichtung als auch in radialer Richtung vorhandene Konizität der Ausnehmungen 5 bzw. stegförmigen Teile 4 bildet eine axiale Verschiebesicherung des Magneten 1 auf dem Grundkörper 2.

Wie insbesondere aus den Figuren 3 und 4 hervorgeht, weisen die Ausnehmungen 5 bzw. stegförmigen Teile 4 des Ringmagneten 1 einen U-förmigen Querschnitt auf, der an der Umfangsfläche des Grundkörpers 2 durch fußförmige Bereiche 8 verengt ist. Die fußförmigen Bereiche 8 übergreifen die Ausnehmung 5 in Umfangrichtung und verhindern ein radiales Auswandern der stegförmigen Teile 4 durch Zentrifugalkräfte bei hohen Drehzahlen des Ringmagneten 1.

Die Ausnehmungen 5 weisen an der vom Ringmagneten 1 abgewandten Stirnseite 9 eine Verbreiterung 10 auf, die als Anspritzhilfe bei der Spritzgieß-Herstellung des Ringmagneten 1 dient. Die Verbreiterung ist im wesentlichen zylinderförmig und der Spritzdüse angepaßt. Sie ist, wie in Figur 1 gezeigt, nicht mit Magnetmaterial gefüllt.

Wie insbesondere in Figur 1 dargestellt ist, weist der Grundkörper 2 an seiner dem Ringmagneten 1 zugewandten Stirnseite 11 einen im wesentlichen zylindrischen Ansatz 12 auf, mit zwei den Ausnehmungen 5 zugewandten Abflachungen 13. Die Abflachungen 13 dienen zusammen mit den Ausnehmungen 5 beim Umspritzen des Grundkörpers 2 mit dem Ringmagneten 1 als Verdrehsicherung.

Wie aus Figur 1 hervor geht, erstreckt sich der Preßbereich 3 des Grundkörpers 2 nicht in den Ansatz 12 hinein, sondern endet mit einem Abstand vor der Stirnseite 11. Daran schließt sich eine stufenförmige Erweiterung des Innendurchmessers des Grundkörpers 2 an, die in den Ansatz 12 übergeht. Der Innendurchmesser der Erweiterung entspricht demjenigen des Ringmagneten 1. Dadurch, daß die an den Ringmagneten 1 stirnseitig angrenzenden Bereiche des Grundkörpers 2 im axialen Abstand vom Preßbereich 3 angeordnet sind, werden axiale Komponenten der durch den Preßsitz des Grundkörpers 2 auf der Welle entstehenden Spannungen nicht in voller Stärke auf den Ringmagneten 1 übertragen.

Aufgrund der Konstruktion des Ringmagneten 1 und Grundkörpers 2 ergibt sich eine Vereinfachung bei der Spritzgieß-Herstellung des Magneten 1 auf den Grundkörper 2. Der Grundkörper 2 wird von einer an seiner Außenfläche anliegenden, im Inneren zylinderförmigen Form umgeben. Der im Inneren der Form angeordnete Kern erstreckt sich in den Ansatz 12 längs des verbreiterten Bereichs des Innendurchmessers des Grundkörpers 2. Das im erwärmten Zustand plastische kunststoffgebundene Magnetmaterial wird von der Stirnseite 9 des Grundkörpers 2 durch die Ausnehmungen 5 in den Formhohlraum gespritzt. Konstruktiv ist darauf zu achten, daß die die Konizität der Ausnehmungen bzw. der darin angeordneten stegförmigen Teile des Magneten definierenden Winkel α und β so bemessen sind, daß die stegförmigen Teile 4 beim Erkalten des Magnetmaterials nicht durch Schrumpfspannungen im Übergangsbereich zu dem sehr viel größeren Volumen des Ringmagneten abreißen. Auf diese Weise erhält man eine insgesamt zylinderförmige Einheit von Ringmagnet 1 und Grundkörper 2, die kraftschlüssig durch Aufstecken auf einer Welle befestigt werden kann.

### Bezugszeichenliste

- 1: kunststoffgebundener Ringmagnet
- 2: Grundkörper
- 3: Preßbereich
- 4: stegförmiger Teil
- 5: Ausnehmungen
- 6: Wandbereich
- 7: Wandbereich
- 8: fußförmiger Bereich
- 9: Stirnseite
- 10: verbreiterung
- 11: Stirnseite
- 12: Ansatz
- 13: Abflachung

## Patentansprüche

1. Kunststoffgebundener Ringmagnet (1) mit einem ringförmigen Grundkörper (2) zur Befestigung des Magneten (1) auf einer Welle, wobei der Magnet (1) im Wesentlichen an einer Stirnseite (11) des Grundkörpers (2) angeordnet ist, der Innendurchmesser des Grundkörpers (2) kleiner ist als derjenige des Magneten (1) und der Grundkörper (2) mindestens eine axial gerichtete, kanalförmige Ausnehmung (5) aufweist, in die sich der Magnet (1) mit einem entsprechend geformten Teil (4) erstreckt, **dadurch gekennzeichnet, dass** der Grundkörper (2) an seiner dem Magneten (1) zugewandten Stirnseite (11) einen im Wesentlichen hohlzylindrischen Ansatz (12) aufweist, dessen äußere Mantelfläche mit einer Abflachung (13) im Bereich der Ausnehmung (5) versehen ist.

2. Kunststoffgebundener Ringmagnet nach Anspruch 1, **dadurch gekennzeichnet, dass** die Ausnehmung (5) in Richtung zum Ringmagneten (1) eine Querschnittsverjüngung aufweist.

3. Kunststoffgebundener Ringmagnet nach Anspruch 1 oder 2, **dadurch gekennzeichnet, dass** die Ausnehmung (5) zur Umfangsfläche des Grundkörpers (2) geöffnet ist.

4. Kunststoffgebundener Ringmagnet nach Anspruch 3, **dadurch gekennzeichnet, dass** die an die Umfangsfläche des Grundkörpers (2) grenzenden Wandbereiche (6) der Ausnehmung (5) zum Ringmagneten (1) hin aufeinander zulaufen.

5. Kunststoffgebundener Ringmagnet nach Anspruch 3 oder 4, **dadurch gekennzeichnet, dass** der radial innen liegende Wandbereich (7) der Ausnehmung (5) in axialer Richtung zur Umfangsfläche des Grundkörpers (2) hin geneigt verläuft.

6. Kunststoffgebundener Ringmagnet nach einem der Ansprüche 1 bis 5, **dadurch gekennzeichnet, dass** die Ausnehmung (5) an der vom Magneten (1) abgewandten Stirnseite (9) eine Verbreiterung (10) als Anspritzhilfe aufweist.

7. Kunststoffgebundener Ringmagnet nach Anspruch 3, **dadurch gekennzeichnet, dass** die Ausnehmung (5) einen im wesentlichen U-förmigen Querschnitt aufweist, der an der Umfangsfläche des Grundkörpers (2) durch fußförmige Bereiche (8) verengt ist.

8. Kunststoffgebundener Ringmagnet nach einem der Ansprüche 1 bis 7, **dadurch gekennzeichnet, dass** zwei diametral gegenüberliegende Ausnehmungen (5) vorgesehen sind.

9. Kunststoffgebundener Ringmagnet nach einem der Ansprüche 1 bis 8, **dadurch gekennzeichnet, dass** der Innendurchmesser des Ansatzes (12) in etwa dem Innendurchmesser des Magneten (1) entspricht.

## Claims

1. Plastic-bonded ring magnet (1) with a ring-shaped basic body (2) for fixing the magnet onto a shaft, with the magnet being essentially located at a front (11) of the basic body (2), the inside diameter of the basic body (2) being smaller than the one of the magnet (1), and the basic body (2) showing at least one axially oriented channel-shaped recess (5) into which the magnet extends with an appropriately shaped part (4), **characterized in that** the basic body (2) shows at its front (11) facing the magnet (1) an essentially hollow-cylindered projection (12), the outside surface area of which is provided with a flattening (13) in the area of the recess (5).

2. Plastic-bonded ring magnet according to claim 1, **characterized in that** the recess (5) shows a tapering of the cross section in a direction towards the ring magnet (1).

3. Plastic-bonded ring magnet according to claim 1 or 2, **characterized in that** the recess (5) is opened towards the circumferential surface of the basic body (2).

4. Plastic-bonded ring magnet according to claim 3, **characterized in that** the wall areas (6) of the recess (5) adjoining the circumferential surface of the basic body (2) run up to each other towards the ring magnet (1).

5. Plastic-bonded ring magnet according to claim 3 or 4, **characterized in that** the radial inside wall area (7) of the recess (5), inclines in axial direction towards the circumferential surface of the basic body (2).

6. Plastic-bonded ring magnet according to one of the claims 1 to 5, **characterized in that** the recess (5) shows a widening (10) as an injecting aid at the front (9) opposite to the magnet (1).

7. Plastic-bonded ring magnet according to claim 3, **characterized in that** the recess (5) shows an essentially U-shaped cross section which is narrowed at the circumferential surface of the basic body (2) by foot-shaped areas (8).

8. Plastic-bonded ring magnet according to one of the claims 1 to 7, **characterized in that** two diametrically opposite recesses (5) are provided.

9. Plastic-bonded ring magnet according to one of the claims 1 to 8, **characterized in that** the inside diameter of the projection (12) is substantially identical to the inside diameter of the magnet (1).

## Revendications

1. Aimant torique lié avec de la matière plastique (1) avec un corps de base en forme d'anneau (2) pour fixer l'aimant (1) sur un arbre, l'aimant (1) étant disposé essentiellement sur un côté frontal (11) du corps de base (2), le diamètre intérieur du corps de base (2) étant inférieur au diamètre intérieur de l'aimant (1) et le corps de base (2) présentant au moins une ouverture orientée axialement et en forme de canal (5) dans laquelle l'aimant (1) s'étend avec une pièce formée de manière appropriée (4), **caractérisé en ce que** le corps de base (2) présente un épaulement (12) essentiellement cylindrique et creux sur son côté frontal (11) tourné vers l'aimant (1), dont la surface extérieure de l'enveloppe est pourvue d'un aplatissement (13) dans la zone de l'ouverture (5).

2. Aimant torique lié avec de la matière plastique selon la revendication 1, **caractérisé en ce que** l'ouverture (5) dans le sens de l'aimant torique (1) présente un rétrécissement transversal.

3. Aimant torique lié avec de la matière plastique selon la revendication 1 ou 2, **caractérisé en ce que** l'ouverture (5) est ouverte en direction de la surface périphérique du corps de base (2).

4. Aimant torique lié avec de la matière plastique selon la revendication 3, **caractérisé en ce que** les zones des parois (6) de l'ouverture (5), contiguës à la surface périphérique du corps de base (2), convergent vers l'aimant torique (1).

5. Aimant torique lié avec de la matière plastique selon la revendication 3 ou 4, **caractérisé en ce que** la zone de la paroi (7) intérieure radiale de l'ouverture (5), est inclinée en direction axiale vers la surface périphérique du corps de base (2).

6. Aimant torique lié avec de la matière plastique selon l'une quelconque des revendications 1 à 5, **caractérisé en ce que** l'ouverture (5) du côté frontal (9) opposé à l'aimant (1) présente un élargissement (10) pour faciliter l'injection.

7. Aimant torique lié avec de la matière plastique selon la revendication 3, **caractérisé en ce que** l'ouverture (5) présente une section transversale essentiellement en forme de U rétrécie à la surface périphérique du corps de base (2) par des zones en forme de pied (8).

8. Aimant torique lié avec de la matière plastique selon l'une quelconque des revendications 1 à 7, **caractérisé en ce que** deux ouvertures diamétralement opposées (5) sont prévues.

9. Aimant torique lié avec de la matière plastique selon la revendications 1 à 8, **caractérisé en ce que** le diamètre intérieur de l'épaulement (12) correspond presque au diamètre intérieur de l'aimant (1).
